# FASCICULE DE BREVET EUROPEEN

(11) **EP 4 476 520 B1**
(45) Date de publication et mention de la délivrance du brevet: **20.05.2026**
(21) Numéro de dépôt: 23702847.7
(22) Date de dépôt: 07.02.2023
(51) Int. Cl.: G01N 3/48

(54) **DISPOSITIF DE SIMULATION DU COMPORTEMENT SUR LE SOL D'UN MEMBRE D'UN MAMMIFERE ET PROCÉDÉ**
VORRICHTUNG ZUR SIMULATION DES VERHALTENS EINER EXTREMITÄT VON SÄUGETIEREN AUF DEM BODEN UND VERFAHREN
DEVICE FOR SIMULATING THE BEHAVIOUR OF A MAMMALIAN LIMB ON THE GROUND AND METHOD

(30) Priorité: 07.02.2022 FR 2201031
(43) Date de publication de la demande: 18.12.2024
(73) Titulaire: Institut National de la Recherche pour l'Agriculture, l'Alimentation et l'Environnement, 75007 Paris (FR); Ecole Nationale Vétérinaire D'Alfort, 94704 Maisons-Alfort (FR); Institut Francais du Cheval et de L'Equitation, 49400 Saumur (FR)
(72) Inventeur: CREVIER-DENOIX, Nathalie, 94340 Joinville le Pont (FR); MUNOZ NATES, Franco Miller, 94700 Maisons-Alfort (FR); POURCELOT, Philippe, 37250 Veigné (FR); DARDILLAT, Claude, 75010 Paris (FR)
(74) Mandataire: Ipsilon
(86) Numéro de dépôt international: PCT/EP2023/052914
(87) Numéro de publication internationale: WO 2023/148394

(56) Documents cités:
- SETTERBO J J ET AL: "Dynamic properties of a dirt and a synthetic equine racetrack surface measured by a track-testing device", EQUINE VETERINARY JOURNAL, R & W PUBLICATIONS, SUFFOLK, GB, vol. 45, no. 1, 16 May 2012 (2012-05-16), pages 25 - 30, XP071654734, ISSN: 0425-1644, DOI: 10.1111/J.2042-3306.2012.00582.X
- JACOB J SETTERBO ET AL: "Effects of equine racetrack surface type, depth, boundary area, and harrowing on dynamic surface properties measured using a track-testing device in a laboratory setting", SPORTS ENGINEERING, SPRINGER-VERLAG, LONDON, vol. 14, no. 2 - 4, 2 October 2011 (2011-10-02), pages 119 - 137, XP019984798, ISSN: 1460-2687, DOI: 10.1007/S12283-011-0073-4
- HOLT D ET AL: "Use of Surface Testing Devices to Identify Potential Risk Factors for Synthetic Equestrian Surfaces", PROCEDIA ENGINEERING, vol. 72, 1 January 2014 (2014-01-01), pages 949 - 954, XP028875563, ISSN: 1877-7058, DOI: 10.1016/J.PROENG.2014.06.160
- PETERSON M L ET AL: "Development of a system for the in-situ characterisation of thoroughbred horse racing track surfaces", BIOSYSTEMS ENGINEERING, ELSEVIER, AMSTERDAM, NL, vol. 101, no. 2, 1 October 2008 (2008-10-01), pages 260 - 269, XP025505717, ISSN: 1537-5110, [retrieved on 20080910], DOI: 10.1016/J.BIOSYSTEMSENG.2008.07.007

## Description

### Domaine technique

La présente invention concerne l'étude de la qualité des terrains sportifs, dans la perspective de minimiser les accidents sportifs et/ou d'accroître le confort d'utilisation de ces terrains.

Par exemple dans le cadre des courses de chevaux, on sait que l'accidentologie du cheval de course et de sport est élevée. En outre, il a été démontré un lien de cause à effet entre la dureté d'une piste d'entrainement et la survenue de lésions des membres sur un effectifs de trotteurs, comme expliqué dans l'article « Effect of track surface firmness on the development of musculoskeletal injuries in French Trotters during four months of harness race training » (Crevier-Denoix et al., American Journal of Veterinary Research, novembre 2017).

La qualité des pistes est un facteur de risque de lésions de l'appareil locomoteur chez les chevaux de courses et de sport. Outre l'impact économique de ces lésions pour les professionnels de la filière, la notion de risque lié au terrain est de moins en moins acceptable sur le plan du bien-être animal. Les professionnels de la filière équine sont demandeurs d'outils permettant d'évaluer objectivement ce risque. Plus généralement, il existe un besoin pour pouvoir qualifier les sols équestres, afin de planifier et mettre en œuvre les opérations de rénovation ou de maintenance, ou encore contrôler l'adéquation d'un sol aux objectifs visés.

### Technique antérieure

A ce jour, les mesures réalisées sur les sols équestres sont très basiques et peu représentatives des sollicitations imposées par le membre d'un cheval. C'est par exemple le cas de la dureté superficielle de pistes des courses de galop, évaluée par des appareils très simples tels que des pénétromètres, dans certains pays. Cette mesure est destinée à informer les parieurs sur l'état du terrain.

On connait un appareil mis au point aux Etats-Unis, nommé Orono Biomechanical Surface Tester (OBST. Peterson et al., 2008), mais qui présente l'inconvénient d'avoir une vitesse d'application de la charge sur le sol non physiologique, celle-ci étant très supérieure à la vitesse physiologique, étant notamment dix fois trop grande. Les résultats obtenus ne sont donc pas transposables. Par ailleurs, l'appareil impose un impact oblique et comporte un ressort à gaz, ce qui risque de perturber la composante verticale de la compression du sol. En outre, cet appareil ne fournit aucune mesure directe de l'enfoncement de l'impacteur dans le sol, ce qui rend impossible la détermination de la raideur du sol.

Les rares appareils disponibles jusqu'ici ne sollicitent ainsi pas le sol comme le font les membres d'un cheval lors d'une course ou d'une épreuve sportive.

La préparation et l'entretien des pistes et des terrains sont basés aujourd'hui essentiellement sur le ressenti des utilisateurs et l'expérience des chefs de pistes, c'est-à-dire sur une évaluation subjective à dire d'experts. L'absence de mesures objectives peut conduire à des situations de conflits, voire de litiges en cas d'accidents, entre les organisateurs de courses et de concours, et les entraineurs et propriétaires de chevaux. Des mesures objectives permettraient de démontrer le bon état des terrains, en prenant en considération le bien-être animal.

Il existe donc un besoin pour bénéficier d'un dispositif permettant de reproduire la phase d'appui de la foulée d'un mammifère et d'évaluer le risque accidentogène d'un terrain sportif.

D'autres dispositifs de simulation du comportement sur le sol d'un membre d'un mammifère sont divulgués dans
SETTERBO J J ET AL : « Dynamic properties of a dirt and a synthetic equine racetrack surface measured by a track-testing device », EQUINE VETERINARY JOURNAL, R & W PUBLICATIONS, SUFFOLK, GB Vol: 45, No. 1, 16 mai 2012 (2012-05-16), Pages 25 - 30, ISSN : 0425-1644, DOI : 10.1111/J.2042-3306.2012.00582.X,
Jacob J Setterbo ET AL : « Effects of equine racetrack surface type, depth, boundary area, and harrowing on dynamic surface properties measured using a track-testing device in a laboratory setting », Sports Engineering, 20111002 Springer-Verlag, London, Vol. 14, No. 2 - 4, 2 octobre 2011 (2011-10-02), page(s): 119 - 137, ISSN : 1460-2687, DOI : 10.1007/S12283-011-0073-4,
Holt D ET AL, « Use of Surface Testing Devices to Identify Potential Risk Factors for Synthetic Equestrian Surfaces », Procedia Engineering Elsevier BV, NL, Vol. 72, pages 949-954, XP028875563, ISSN : 1877-7058, DOI : 10.1016/J.PROENG.2014.06.160, et
Peterson M L ET AL, « Development of a system for the in-situ characterisation of thoroughbred horse racing track surfaces », Biosystems Engineering, ELSEVIER, AMSTERDAM, NL, Vol. 101, no. 2, 1 octobre 2008 (2008-10-01), pages 260-269, XP025505717, ISSN : 1537-5110, DOI : 10.1016/J.BIOSYSTEMSENG.2008.07.007.

### Résumé de l'invention

L'invention a ainsi pour objet, selon l'un de ses aspects, un dispositif de simulation du comportement sur le sol d'un membre d'un mammifère, notamment d'un mammifère équin, comportant :
- un impacteur en contact avec le sol, destiné à comprimer le sol,
- notamment un axe vertical relié à l'impacteur à son extrémité inférieure,
- une masse mobile selon un axe rectiligne vertical, destinée à provoquer la descente de l'impacteur dans le sol,
- une ou plusieurs butées, placées sur une ou des tiges verticales le long desquelles se déplace la masse, la ou les tiges verticales étant reliées à l'axe vertical par un ou des organes élastiques,
- un capteur de mesure de la force verticale appliquée sur l'impacteur,
- un dispositif de mesure de l'enfoncement de l'impacteur dans le sol, sous l'effet du déplacement de la masse.

Le dispositif comporte un axe vertical relié à l'impacteur à son extrémité inférieure, ainsi qu'une ou plusieurs butées, placées sur une ou des tiges verticales le long desquelles se déplace la masse, la ou les tiges verticales étant reliées à l'axe vertical par un ou des organes élastiques.

Le ou les organes élastiques étant reliés d'une part à la masse, par l'intermédiaire de la ou des tiges munies d'écrous, et d'autre part à l'axe vertical, solidaire de l'impacteur, en ralentissant la chute verticale de la masse, le ou les organes élastiques ralentissent la compression du sol par l'impacteur.

Le dispositif selon l'invention permet de simuler le comportement en appui du membre sur le sol. L'impacteur est configuré pour simuler le bas du membre, par exemple le sabot d'un cheval.

Lors du déplacement de la masse, l'impacteur peut comprimer le sol et s'enfoncer dans celui-ci. Il peut effectuer une première compression puis un ou plusieurs rebonds dans le sol, notamment sous l'effet du déplacement de la masse qui peut elle-même effectuer une première descente puis un ou plusieurs rebonds. La masse peut remonter spontanément.

Le dispositif de simulation selon l'invention permet notamment de reproduire la sollicitation verticale imposée au sol par le membre antérieur d'un cheval en conditions sportives. Ceci permet d'analyser la raideur du sol pour différents niveaux de charge, la raideur au voisinage de la force maximale étant la plus critique pour le mammifère.

### Exposé de l'invention

Le dispositif de simulation peut être configuré pour permettre d'effectuer des mesures sur la première compression et/ou sur les rebonds.

L'impacteur peut comporter une surface inférieure destinée à être en contact avec le sol. La surface inférieure de l'impacteur peut ne pas être entièrement plane. Elle peut par exemple avoir une courbure reproduisant la forme de la surface d'appui au sol du membre du mammifère.

L'impacteur peut comporter une surface arrière comportant une entaille. La présence de l'entaille peut par exemple reproduire la forme du membre du mammifère, par exemple du sabot d'un cheval.

L'impacteur peut comporter une surface supérieure sur laquelle est ménagé un logement pour recevoir le capteur de force.

L'impacteur peut être en contact avec le sol tout au long de l'utilisation du dispositif de simulation, y compris avant le déplacement de la masse.

Le capteur de mesure de force peut être uniaxial.

Le dispositif de simulation peut par exemple être utilisé sur des terrains tels que des pistes équestres afin de simuler de façon réaliste la mise en charge du sol par le membre antérieur d'un cheval, en conditions sportives et physiologiques.

Le dispositif de simulation peut permettre d'obtenir une mise en charge progressive du sol, par exemple en quelques dizaines de millisecondes, tout en atteignant des valeurs de force maximale élevées, par exemple 1 à 1,5 tonnes, conformément à ce qui a été mesuré sur des chevaux à l'entraînement. Le dispositif de simulation peut ainsi permettre d'obtenir des mesures de force reproductibles et discriminantes, pour une sollicitation physiologique du sol.

Le dispositif de simulation peut être configuré pour que la force verticale maximale obtenue par la chute de la masse soit supérieure à 4 000 N. La force verticale maximale peut être élevée, étant notamment supérieure à 6 000 N, voire supérieure à 8 000 N, mieux supérieure à 9 000 N, étant par exemple de l'ordre de 10 000 N, notamment dans le cas où le mammifère est un mammifère équin. Dans le cas où il s'agit d'un mammifère canin par exemple, la force verticale maximale peut être notamment supérieure à 100 N, voire supérieure à 300 N, mieux supérieure à 600 N, étant par exemple de l'ordre de 900 N.

Dans le cas où il s'agit d'un homme par exemple, la force verticale maximale peut être notamment supérieure à 700 N, voire supérieure à 1000 N, mieux supérieure à 1500 N, étant par exemple de l'ordre de 2000 N.

La masse est configurée pour que la force verticale obtenue soit comparable aux variables biométriques du mammifère.

Le dispositif de simulation peut comporter un axe vertical le long duquel se déplace la masse. L'axe vertical peut être relié à l'impacteur à son extrémité inférieure. L'axe vertical peut être mobile en translation verticale, entraînant le déplacement de l'impacteur. Le dispositif peut être configuré pour que l'impacteur ait la possibilité d'un déplacement vertical.

Le dispositif peut comporter un dispositif de mesure de l'enfoncement de l'impacteur dans le sol comportant un capteur de déplacement, notamment un potentiomètre linéaire. Le dispositif de mesure de l'enfoncement de l'impacteur dans le sol peut être configuré pour mesurer un déplacement vertical.

Le dispositif peut permettre une mesure directe de l'enfoncement de l'impacteur dans le sol.

Le dispositif de mesure de l'enfoncement de l'impacteur dans le sol peut être fixé à un châssis du dispositif de simulation, lequel peut rester immobile pendant la simulation. Il peut être fixé dans le haut du dispositif de simulation, sur une équerre du châssis.

Le dispositif de mesure de l'enfoncement de l'impacteur dans le sol peut comporter en outre un fil accroché par un point fixe sur l'axe vertical. La variation de longueur de ce fil provoque une variation de la tension en Volt relevée aux bornes du potentiomètre. Cette variation permet d'obtenir une distance de déplacement de l'axe vertical.

Le déplacement de la masse peut comporter une première portion en chute libre, par exemple sur une distance L, notamment comprise entre 20 et 50 cm, mieux entre 25 et 40 cm, étant par exemple de l'ordre de 30 cm. La hauteur de chute de la masse est configurée pour que la force verticale obtenue soit comparable aux variables biométriques du mammifère.

La valeur de la masse peut être comprise entre 10 et 1000 kg, notamment entre 20 et 500 kg, voire entre 30 et 300 kg, mieux entre 50 et 200 kg, étant par exemple de 110 kg. La masse peut par exemple comporter dans un mode de réalisation un empilement de 5 anneaux de 20 kg et un anneau de 10 kg.

La valeur de la masse et la hauteur de chute de la masse sont configurées pour que, lorsque combinées ensemble, la force verticale obtenue soit comparable aux variables biométriques du mammifère.

La première portion en chute libre peut être limitée par une ou des butées. A cet effet, le dispositif de simulation peut comporter une ou plusieurs butées, notamment placées sur une ou des tiges verticales le long desquelles se déplace la masse.

Le dispositif peut comporter dans un mode de réalisation deux tiges verticales, parallèles l'une à l'autre, comportant chacune une butée. La butée peut être placée à la distance L de la position initiale de la masse, avant son déplacement vertical en chute libre.

Une butée peut comporter un écrou fixé sur la tige verticale correspondante.

Le déplacement de la masse peut comporter une deuxième portion en chute verticale ralentie. Le ralentissement peut être obtenu par l'action d'un ou d'organes élastiques auxquels sont suspendues les tiges verticales munies de la ou des butées sur lesquelles vient buter la masse à la fin de sa chute libre. A la fin de sa chute libre, la masse tire sur le ou les organes élastiques, et sa chute est alors ralentie. Le ou les organes élastiques peuvent être configurés pour que la force verticale devienne maximale en un temps comparable aux variables biométriques du mammifère.

La ou les tiges verticales peuvent être reliées à l'axe vertical par un ou des organes élastiques. Le ou les organes élastiques peuvent comporter un matériau élastique, par exemple un ruban en matériau élastique.

Le matériau élastique peut être non métallique, notamment en matière plastique, par exemple en latex.

Le matériau élastique une fois préparé peut constituer le ou les organes élastiques permettant le ralentissement de la descente de la masse, donc de la compression du sol.

Le ou les organes élastiques peuvent avoir une raideur globale comprise entre 50 000 et 500 000 N/m, mieux entre 100 000 et 200 000 N/m, par exemple de l'ordre de 150 000 N/m.

L'organe élastique s'allonge sous l'effet de la descente de la masse. Il permet de reproduire l'élasticité du membre du mammifère.

Les organes élastiques peuvent être rendus solidaires de l'axe vertical par une platine, laquelle peut être liée à l'axe vertical par une goupille.

Un déplacement du ou des organes élastiques vers le bas peut entrainer le déplacement de l'axe vertical, par l'intermédiaire de la platine.

L'allongement du ou des organes élastiques peut être égal à la distance parcourue par la masse, le long de l'axe, pendant la deuxième portion de son déplacement en chute verticale ralentie.

Lors du déplacement de la masse, l'impacteur peut comprimer le sol et s'enfoncer dans celui-ci. Il peut effectuer une première compression puis un ou plusieurs rebonds dans le sol, notamment sous l'effet du déplacement de la masse qui peut elle-même effectuer une première descente puis un ou plusieurs rebonds. La masse peut remonter spontanément.

Le dispositif de simulation peut être configuré pour permettre d'effectuer des mesures sur la première compression et/ou sur les rebonds.

Le dispositif de simulation peut être configuré pour que la vitesse de compression du sol soit comprise entre 50 kN/s et 500 kN/s. La vitesse de compression du sol peut notamment être inférieure à 400 kN/s, voire inférieure à 300 kN/s mieux inférieure à 200 kN/s.

La masse est configurée pour que la vitesse de compression du sol obtenue soit comparable aux variables biométriques du mammifère.

Le dispositif de simulation peut permettre notamment de mesurer la raideur du sol, qui correspond à la pente du tracé de la force verticale en fonction de l'enfoncement de l'impacteur dans le sol.

Le dispositif de simulation peut être configuré pour fournir la raideur moyenne du sol, qui est le rapport de la force verticale maximale sur l'enfoncement correspondant de l'impacteur dans le sol. La raideur du sol (en anglais « *stiffness* ») peut être un paramètre caractéristique d'un sol donné, qui est très discriminant pour apprécier le risque accidentogène d'un sol. La raideur du sol peut être spécifique d'un sol donné dans un état donné. La raideur moyenne du sol peut être inférieure à 3000 kN/m, mieux inférieure à 2500 kN/m, voire inférieure à 2000 kN/m.

En variante ou additionnellement, le dispositif de simulation peut être configuré pour fournir les raideurs segmentaires, pour différents niveaux de force, en particulier pour les forces les plus élevées.

Le dispositif de simulation peut être configuré pour fournir le coefficient d'amortissement du sol, à partir de la pente de la droite passant par les sommets des pics consécutifs de la force verticale, lors des impacts et rebonds consécutifs. Le coefficient d'amortissement du sol traduit la restitution d'énergie que fournit le sol au mammifère, notamment au cheval. Il se calcule grâce aux rebonds de l'impacteur dans le sol. Le coefficient d'amortissement peut permettre de prédire la capacité d'un sol à se compacter sous l'effet des rebonds de l'impacteur.

La connaissance de la raideur du sol et de ce coefficient d'amortissement peut permettre d'émettre des recommandations d'entretien adaptées pour le sol d'un terrain sportif, notamment d'un terrain équestre, notamment des recommandations d'entretien à court terme du sol. Par 'à court terme', on entend que ces recommandations sont à effectuer dans les 10 heures, voire dans les 8 heures, mieux dans les 6 heures, mieux encore dans les 4 heures.

L'application de ces recommandations a pour objectif de permettre d'une part d'améliorer les performances du sol, notamment en termes sportifs, et d'autre part de minimiser les risques d'accident.

Le dispositif selon l'invention permet de mesurer au moins plusieurs des paramètres reproductibles et discriminants, choisis dans la liste suivante : force verticale, force verticale maximale, enfoncement de l'impacteur dans le sol, enfoncement maximal de l'impacteur dans le sol, raideur moyenne et raideurs segmentaires, remontée du sol après l'impact, coefficient d'amortissement du sol. On peut déduire avantageusement la raideur moyenne du sol, à partir des mesures de la force verticale maximale et de l'enfoncement correspondant de l'impacteur dans le sol.

Le dispositif de simulation peut permettre de simuler le comportement sur le sol d'un membre d'un mammifère, notamment d'un mammifère animal, notamment d'un mammifère équin, en particulier d'un cheval. Le mammifère animal peut être un équidé et de façon préférentielle un cheval. Le membre peut être le membre antérieur d'un mammifère, notamment d'un mammifère animal, notamment d'un mammifère équin, en particulier d'un cheval. Le mammifère peut être ainsi un animal.

En variante, le mammifère peut être un homme, par exemple un sportif tel que coureur, footballeur ou rugbyman.

Le dispositif peut être configuré pour être mobile en déplacement, comportant notamment des roues, par exemple deux roues sur lesquelles est monté un châssis du dispositif.

Le dispositif peut être motorisé, ou en variante être configuré pour être entrainé en déplacement par un engin motorisé, par exemple un quad, tracteur, ou autre. Le châssis peut comporter à cet effet des moyens d'attelage.

Le dispositif peut être configuré pour permettre des prises de mesure consécutives séparées d'un intervalle de temps inférieur à 15 minutes, mieux inférieur à 12 minutes, voir inférieur à 10 minutes, mieux encore inférieur à 5 minutes, par exemple toutes les 2 à 4 minutes, notamment toutes les 3 minutes. Un intervalle de temps court permet une rapidité de mesures suffisantes pour effectuer des mesures en nombre suffisant sur un terrain de taille importante, en un temps raisonnable, par exemple inférieur à 5 heures, notamment de 1 heure, ou bien de 2 à 3 heures pour un terrain qui peut par exemple avoir une surface de l'ordre de 6000 à 8000 m2. On peut par exemple effectuer une dizaine de mesures en moins d'une heure.

L'invention a encore pour objet, indépendamment ou en combinaison avec ce qui précède, un procédé de détermination du risque accidentogène d'un terrain sportif, notamment d'un terrain équestre, dans lequel on mesure, au moyen d'un dispositif de simulation tel que décrit ci-dessus, au moins l'un des paramètres de la liste suivante : force verticale, force verticale maximale, enfoncement de l'impacteur dans le sol, enfoncement maximal de l'impacteur dans le sol, remontée du sol après l'impact, raideur moyenne et raideurs segmentaires, et coefficient d'amortissement du sol.

Le terrain sportif peut être par exemple choisi dans liste suivante, qui n'est pas limitative : terrain équestre, piste de course sur un hippodrome, piste d'entraînement, carrière, manège, paddock. Le terrain sportif peut en variante être une piste de course ou un terrain de sport collectif, par exemple un terrain de football ou de rugby.

Dans ce procédé on peut déterminer un risque accidentogène du terrain sportif pratiqué par des mammifères, notamment du terrain équestre, à partir du ou des paramètres mesurés.

Par 'risque accidentogène', on entend que l'utilisation du terrain en conditions sportives peut favoriser la survenue d'un accident pour le mammifère utilisateur.

Le risque accidentogène est acceptable lorsque par exemple la raideur moyenne du sol est inférieure à 3000 kN/m, mieux inférieure à 2500 kN/m, voire inférieure à 2000 kN/m.

La mise en œuvre du procédé peut permettre de suggérer ou de prescrire des recommandations d'entretien adaptées pour le sol du terrain sportif, notamment du terrain équestre, notamment des recommandations d'entretien à court ou moyen terme du sol. Les recommandations d'entretien peuvent comporter : arrosage, hersage, décompactage, drainage, maintien à l'ombre, ou au contraire exposition au soleil, cette liste n'étant pas limitative.

La mise en œuvre du procédé peut permettre d' établir une cartographie du terrain sportif en fonction des mesures effectuées et de leur localisation.

Les applications possibles sont la préparation et la maintenance de pistes de courses, par exemple de trot ou de galop, ainsi que celles des terrains de concours complet d'équitation, des carrières de saut d'obstacles ou de dressage, afin de garantir la non-dangerosité de ces terrains et d'accroître leur confort d'utilisation.

Les utilisateurs du dispositif de simulation et du procédé selon l'invention peuvent être des professionnels spécialisés dans la maintenance des pistes équestres, des personnes en charge des hippodromes et centres d'entraînement de galop ou de trot, des responsables des pistes de concours complet d'équitation, des fabricants de sols, des contrôleurs de sols sportifs, cette liste n'étant pas limitative.

### Brève description des dessins

L'invention pourra être mieux comprise à la lecture de la description détaillée qui va suivre, d'exemples de mise en œuvre non limitatifs de celle-ci, et à l'examen du dessin annexé, sur lequel :
[Fig 1] La figure 1 est une vue en perspective, schématique et partielle, d'un dispositif de simulation conforme à l'invention.
[Fig 2] La figure 2 est une vue en perspective, schématique et partielle, du dispositif de simulation de la figure 1.
[Fig 3] La figure 3 est une vue de côté, schématique et partielle, du dispositif de simulation de la figure 1.
[Fig 4] La figure 4 est une vue de face, schématique et partielle, du dispositif de simulation de la figure 1.
[Fig 5] La figure 5 est une vue de face, schématique et partielle, du dispositif de simulation de la figure 1, avant un test.
[Fig 6] La figure 6 est une vue de face, schématique et partielle, du dispositif de simulation de la figure 1 en fonctionnement.
[Fig 7] La figure 7 illustre l'évolution dans le temps de la force verticale lors du fonctionnement du dispositif de simulation de la figure 1.
[Fig 8] La figure 8 illustre l'évolution dans le temps de l'enfoncement de l'impacteur dans le sol lors du fonctionnement du dispositif de simulation de la figure 1.
[Fig 9] La figure 9 illustre l'évolution de la force verticale, jusqu'à la force verticale maximale Fz max, en fonction de l'enfoncement de l'impacteur dans le sol lors du fonctionnement du dispositif de simulation de la figure 1. La pente du tracé correspond à la raideur du sol.
[Fig 10] La figure 10 illustre la raideur du sol pour différents terrains.
[Fig 11] La figure 11 illustre l'évolution dans le temps de la force verticale lors du fonctionnement du dispositif de simulation de la figure 1, avec plusieurs rebonds.

### Description détaillée

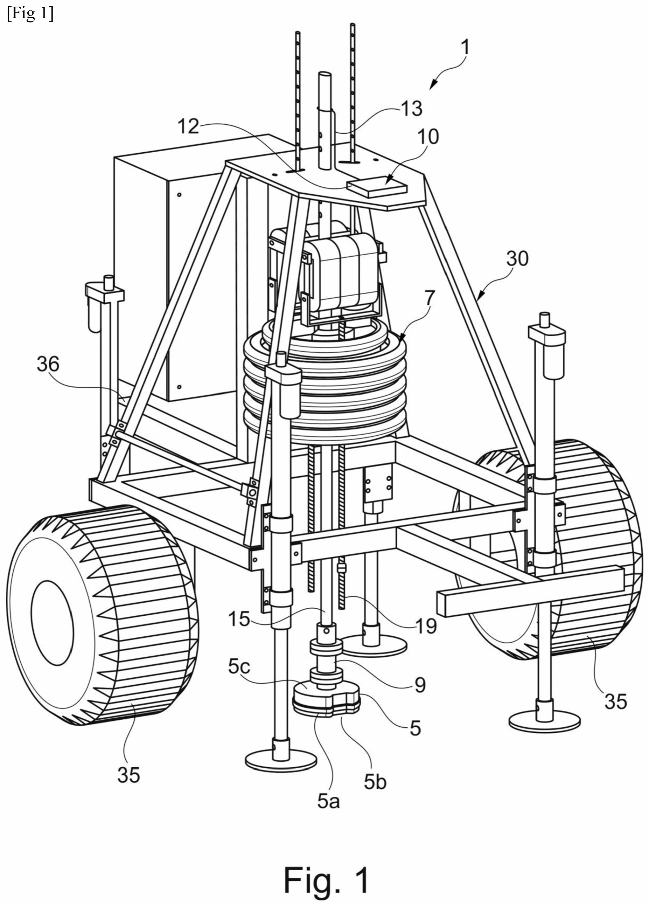

On a illustré aux figures 1 à 6 un dispositif de simulation 1 du comportement sur le sol d'un membre d'un mammifère équin, conforme à l'invention. Ce dispositif de simulation 1 est destiné à être utilisé sur des terrains tels que des pistes équestres afin de simuler de façon réaliste la mise en charge du sol par le membre antérieur d'un cheval, en conditions sportives et physiologiques.

Le dispositif 1 comporte un impacteur 5 en contact avec le sol S et destiné à comprimer le sol, ainsi qu'une masse 7 mobile selon un axe rectiligne vertical, un capteur de mesure 9 de la force verticale appliquée sur l'impacteur, et un dispositif de mesure 10 de l'enfoncement de l'impacteur dans le sol, sous l'effet du déplacement de la masse 7.

Le dispositif 1 selon l'invention permet de simuler le comportement en appui du membre sur le sol. L'impacteur 5 est destiné à simuler le sabot d'un cheval. Il comporte une surface inférieure 5a destinée à être en contact avec le sol, qui n'est pas entièrement plane, ayant une courbure reproduisant la forme de la surface d'appui au sol du sabot du cheval. Par ailleurs, l'impacteur comporte une surface arrière comportant une entaille 5b, laquelle permet de reproduire la forme du sabot du cheval, comme visible sur la figure 1. L'impacteur comporte également une surface supérieure 5c sur laquelle est ménagé un logement pour recevoir l'extrémité d'un axe vertical 15, celle-ci incluant le capteur 9 de mesure de la force. Le capteur 9 de mesure de force est uniaxial.

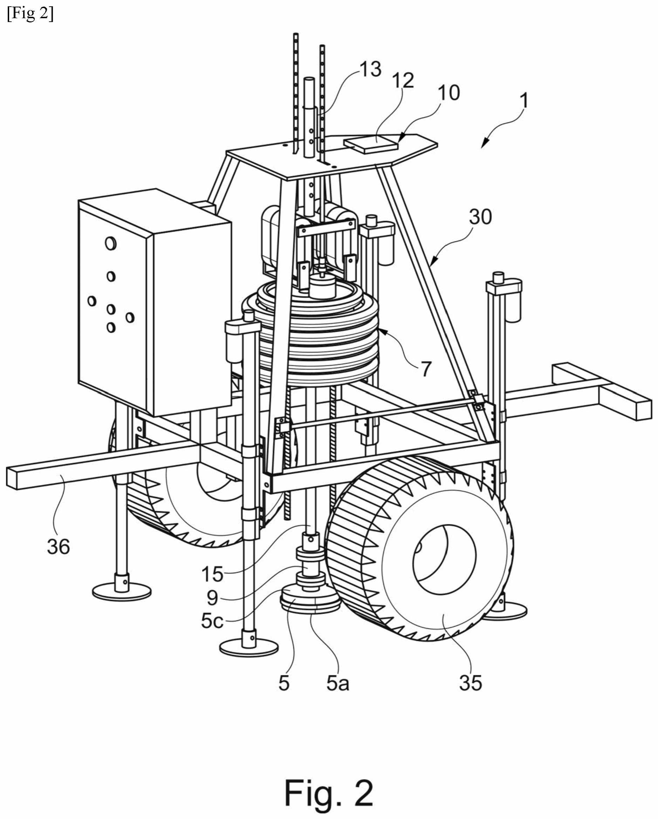

La masse 7 est configurée pour que la force verticale obtenue soit comparable aux variables biométriques du mammifère. Elle comporte dans cet exemple un empilement de 5 anneaux de 20 kg et d'un anneau de 10 kg, comme visible sur la figure 2 par exemple. De la sorte, la force verticale maximale produite au sol est de l'ordre de 10 000 N.

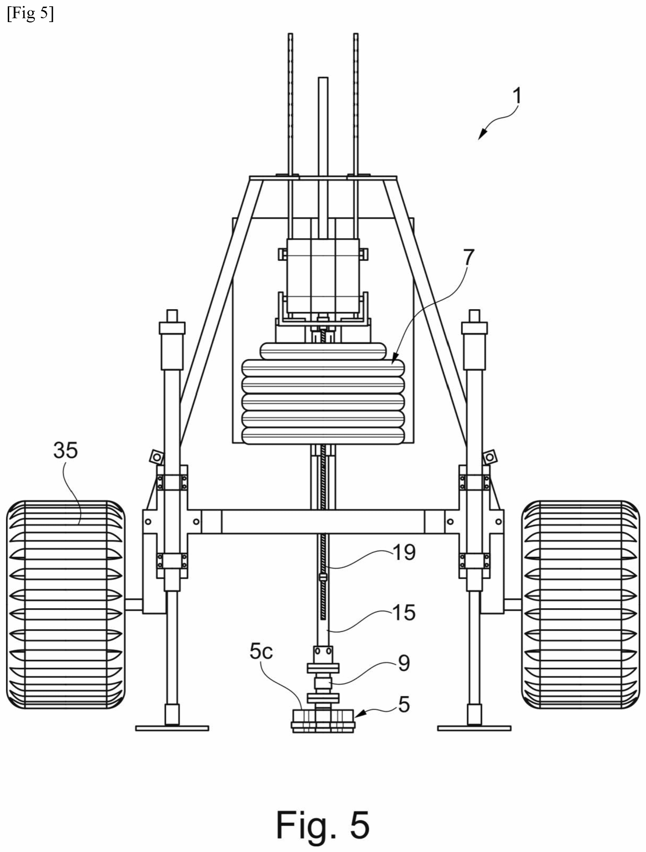

On voit sur la figure 5 le châssis et l'impacteur en position prêts à fonctionner. On voit quatre vérins abaissés de manière à reposer au sol. La masse 7 est maintenue par des électro-aimants solidaires du châssis, de façon à assurer la hauteur de chute souhaitée pour la masse.

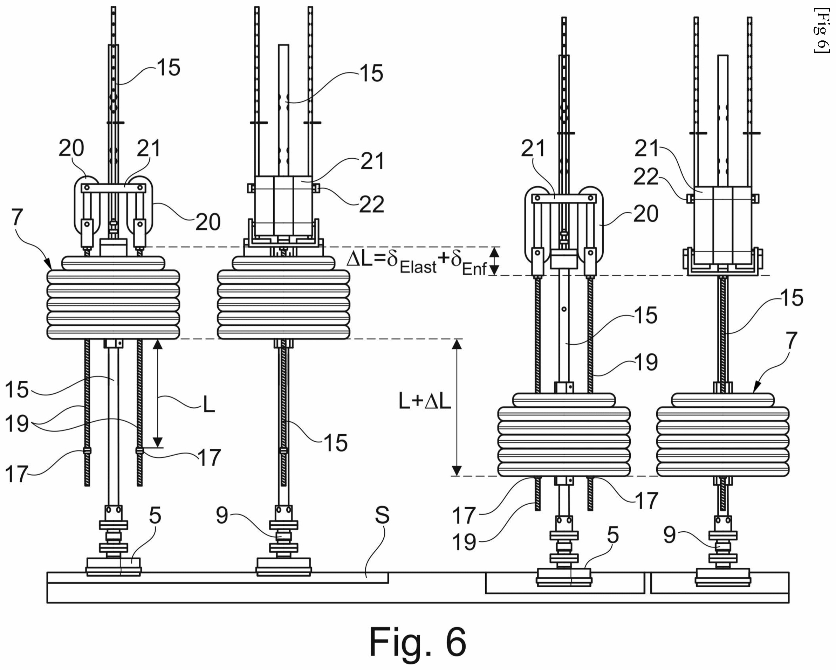

Lors du déplacement de la masse 7, l'impacteur 5 comprime le sol S et s'enfonce dans celui-ci, comme visible sur la figure 6.

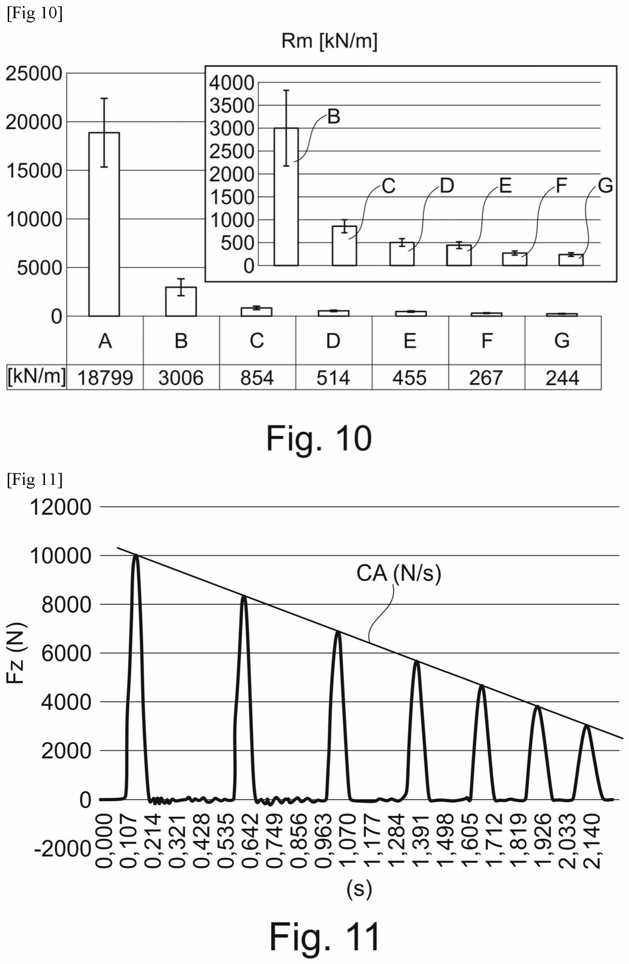

L'impacteur 5 effectue une première compression puis des rebonds dans le sol, sous l'effet du déplacement de la masse 7 qui effectue elle-même une première descente puis des rebonds, comme visible sur la figure 11. La masse remonte spontanément. Le dispositif de simulation 1 est configuré pour permettre d'effectuer des mesures sur la première compression, et sur les rebonds.

Le dispositif de simulation 1 permet d'obtenir une mise en charge progressive du sol, par exemple en quelques dizaines de millisecondes, tout en atteignant des valeurs de force maximale élevées, par exemple 1 à 1,5 tonnes, conformément à ce qui a été mesuré sur des chevaux à l'entraînement.

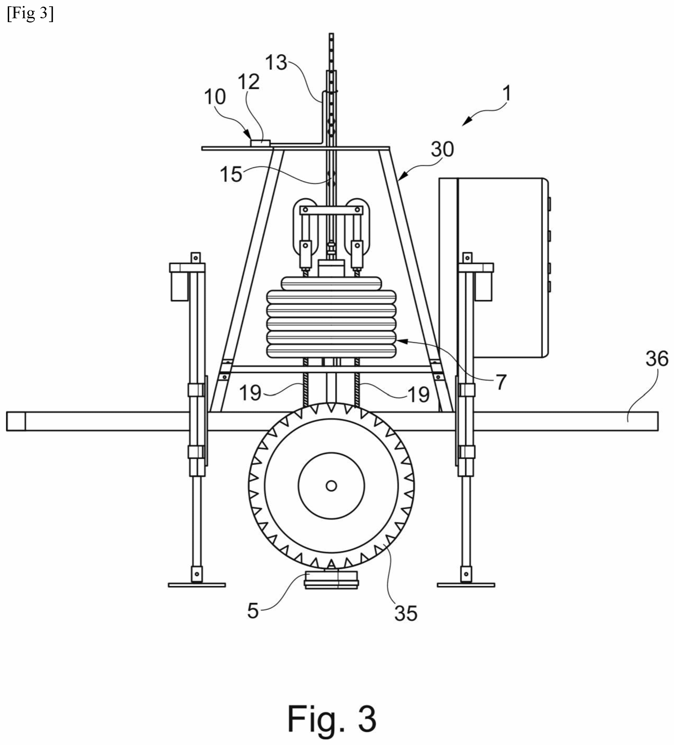

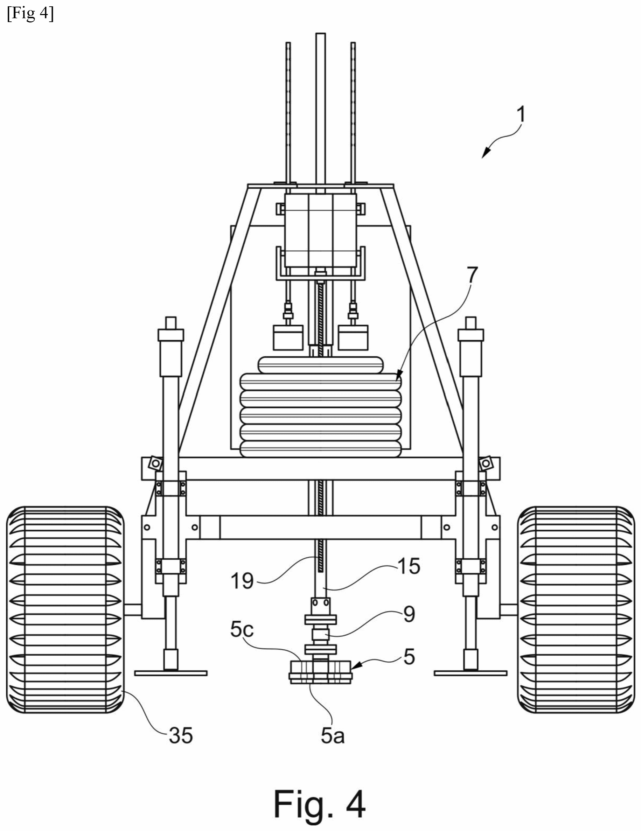

Le dispositif de simulation 1 comporte à cet effet un axe vertical 15 le long duquel se déplace la masse 7, comme visible sur les figures 3 et 4. L'axe vertical 15 appuie sur l'impacteur 5 par son extrémité inférieure. Il est mobile en translation verticale, entraînant le déplacement de l'impacteur 5.

Le déplacement de la masse comporte une première portion en chute libre, sur une distance L, qui est par exemple de l'ordre de 30 cm.

La première portion en chute libre est limitée par des butées 17 formées chacune d'un écrou. Une butée est placée sur une tige verticale 19 le long de laquelle se déplace la masse 7. Le dispositif comporte ainsi deux tiges verticales 19, parallèles l'une à l'autre, comportant chacune une butée 17. Chaque butée 17 est placée à la distance L de la position initiale de la masse, avant son déplacement vertical en chute libre.

Le déplacement de la masse 7 comporte une deuxième portion en chute verticale ralentie. Le ralentissement est obtenu par l'action d'organes élastiques 20 auxquels sont suspendues les tiges verticales 19 et les butées 17 sur lesquelles vient buter la masse 7 à la fin de sa chute libre. Ainsi, à la fin de sa chute libre, la masse tire sur les organes élastiques 20, et sa chute est alors ralentie. L'organe élastique s'allonge sous l'effet de la chute de la masse. Il permet de reproduire l'élasticité du membre du mammifère.

Les organes élastiques 20 comportent un matériau élastique, par exemple du latex, sous forme de ruban.

Les organes élastiques 20 sont rendus solidaires de l'axe vertical 15 par une platine 21, laquelle est liée à l'axe vertical 15 par une goupille 22. Un déplacement des organes élastiques 20 vers le bas entraine ainsi le déplacement de l'axe vertical, par l'intermédiaire de la platine 21, comme bien visible sur la figure 6.

L'allongement δElast du ou des organes élastiques est égale à la distance parcourue par la masse, le long de l'axe, pendant la deuxième portion de son déplacement en chute verticale ralentie.

Lors du déplacement de la masse, l'impacteur 5 comprime le sol et il s'enfonce dans celui-ci.

Sur la figure 6, la distance ΔL traduit la variation de position de la partie basse des élastiques entre 2 instants : avant le lâcher de la masse, et une fois l'impacteur enfoncé dans le sol. ΔL correspond à la somme de l'allongement des élastiques et de la descente de l'axe vertical, qui correspond lui-même à l'enfoncement de l'impacteur dans le sol (δEnf).

On a ainsi ΔL = δElast + δEnf.

On mesure l'enfoncement de l'impacteur à l'aide du dispositif de mesure 10, lequel comporte à cet effet un potentiomètre linéaire 12 qui est équipé d'un fil 13 accroché par un point fixe sur l'axe vertical 15. La variation de longueur de ce fil 13 provoque une variation de la tension en Volt relevée aux bornes du potentiomètre. Cette variation permet d'obtenir une distance de déplacement de l'axe vertical 15.

Le dispositif de mesure 10 de l'enfoncement de l'impacteur dans le sol est fixé à un châssis 30 du dispositif de simulation 1, lequel reste immobile pendant la simulation. Le dispositif de mesure 10 est fixé sur une équerre, placée sur le haut du châssis 30.

Le dispositif de simulation est configuré pour être mobile en déplacement, comportant deux roues 35, sur lesquelles est monté le châssis 30. Le dispositif peut ainsi être entrainé en déplacement par un engin motorisé, par exemple un quad, tracteur, ou autre. Le châssis peut comporter à cet effet des moyens d'attelage 36.

Le dispositif 1 permet ainsi d'effectuer des prises de mesure consécutives séparées d'un intervalle de temps faible, par exemple toutes les 2 à 4 minutes, ce qui permet une rapidité de mesures suffisantes pour effectuer des mesures en nombre suffisant sur un terrain de taille importante, en un temps raisonnable. On peut par exemple effectuer une dizaine de mesures en moins d'une heure.

On va maintenant décrire les différents paramètres mesurés ou calculés, qui sont reproductibles et discriminants pour la qualification d'un terrain.

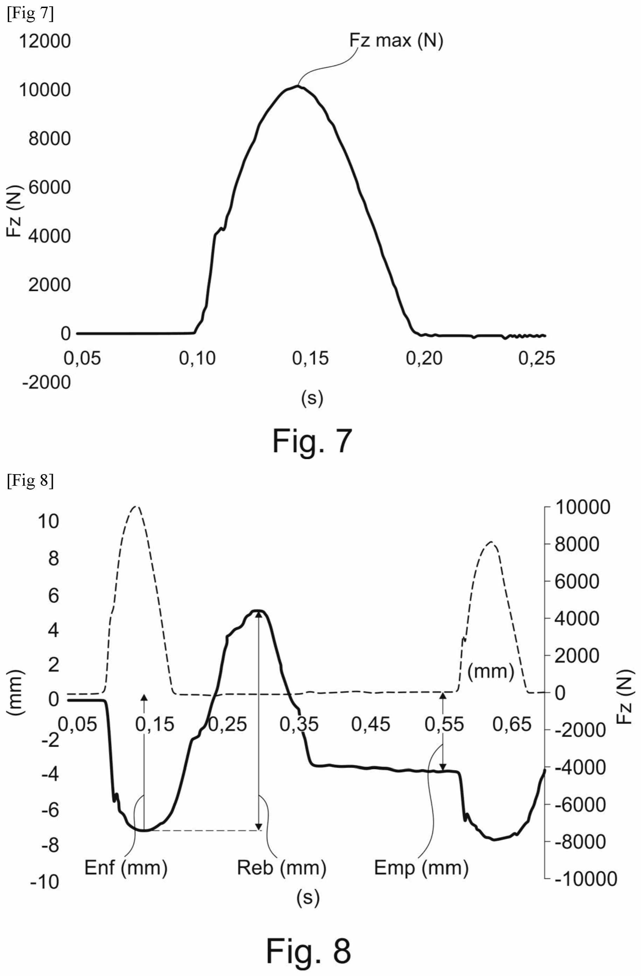

On a illustré à la figure 7 l'évolution dans le temps de la force verticale Fz lors du fonctionnement du dispositif de simulation 1. Le temps est exprimé en secondes et la force verticale Fz en Newton. On voit sur ce graphique le premier impact, avec la force verticale maximale Fz max atteinte qui est de l'ordre de 10000 N.

On a illustré à la figure 8 l'évolution dans le temps de l'enfoncement de l'impacteur 5 dans le sol lors du fonctionnement du dispositif de simulation 1. Le temps est exprimé en secondes et l'enfoncement en mm. On voit sur ce graphique deux appuis, à savoir la première compression et le premier rebond. En pointillés en superposition est montrée l'évolution en parallèle de la force verticale Fz en Newton.

On peut ainsi observer sur ce graphique de la figure 8 l'enfoncement Enf subi par l'impacteur 5 lors de la première compression, donné par le déplacement de l'axe central 15 mesuré sur l'axe, puis la hauteur Reb du rebond effectué par l'impacteur, qui traduit la restitution d'énergie du sol suite à la première compression, et enfin la trace de l'empreinte Emp laissée par l'impacteur dans le sol.

La remontée du sol après l'impact peut être obtenue en calculant la différence entre l'enfoncement maximal de l'impacteur dans le sol et l'empreinte.

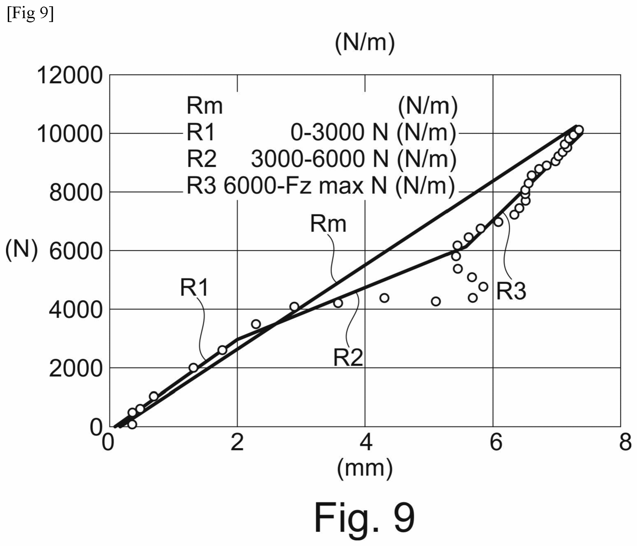

La mesure de la force verticale et celle de l'enfoncement permettent de déduire la raideur du sol en kN/m, qui correspond à la pente du tracé de la force verticale Fz en fonction de l'enfoncement de l'impacteur dans le sol, pente que l'on a illustrée à la figure 9. On peut ensuite déduire la raideur moyenne Rm, qui est fournie par la pente de la courbe et qui est calculée par le rapport de la force verticale maximale Fz max sur l'enfoncement Enf correspondant de l'impacteur dans le sol.

La raideur du sol est un paramètre caractéristique d'un sol dans un état donné, qui est très discriminant pour apprécier le risque accidentogène d'un sol.

On peut distinguer plusieurs segments au sein de la courbe Force-Enfoncement et calculer la pente par segment, afin d'obtenir une raideur segmentaire R1, R2, R3. On peut définir un premier segment R1 pour lequel la force est par exemple comprise entre environ 0 et 3000 N, puis un deuxième segment R2 entre 3000 et 6000 N, et enfin un troisième segment R3 pour lequel la force est supérieure à 6000 N. On calcule ainsi une valeur de raideur en kN/m pour chaque segment, respectivement les raideurs R1, R2, R3, et la raideur moyenne Rm, toutes exprimées en kN/m.

L'invention permet ainsi d'identifier les sols pour lesquels la raideur pour les forces les plus élevées est grande, c'est-à-dire par exemple dans le troisième segment décrit ci-dessus. La raideur pour les forces les plus élevées est en effet la plus potentiellement accidentogène pour le cheval, elle correspond à la phase de mise en charge maximale du membre lors de son appui au sol.

On peut ainsi, grâce au dispositif décrit ci-dessus, procéder à la détermination du risque accidentogène d'un terrain par exemple équestre. A cet effet, on mesure au moins l'un des paramètres de la liste suivante : force verticale, force verticale maximale, enfoncement de l'impacteur dans le sol, enfoncement maximal de l'impacteur dans le sol, remontée du sol après l'impact, raideur moyenne et raideurs segmentaires, et coefficient d'amortissement du sol, comme décrit précédemment, puis on détermine le risque accidentogène potentiel du terrain équestre, à partir du ou des paramètres mesurés, c'est-à-dire le risque que l'utilisation du terrain en conditions sportives favorise la survenue d'un accident pour le cheval.

A titre d'exemple, on a illustré à la figure 10 plusieurs valeurs de raideurs obtenues sur divers terrains. Le premier terrain A est un sol asphalté, le deuxième B est un terrain dur en sable concassé non entretenu, et les suivants, C à G, différents sols équestres, pour lesquels la raideur moyenne du sol est inférieure à 3000 kN/m, mieux inférieure à 2500 kN/m, voire inférieure à 2000 kN/m.

La mise en œuvre du procédé peut permettre de suggérer ou de prescrire des recommandations d'entretien adaptées pour le sol du terrain sportif, notamment du terrain équestre, notamment des recommandations d'entretien à court ou moyen terme du sol, dans l'objectif de faire diminuer la valeur de la raideur moyenne du sol. Les recommandations d'entretien peuvent comporter : arrosage, hersage, décompactage, drainage, maintien à l'ombre, exposition au soleil, cette liste n'étant pas limitative.

La mise en œuvre du procédé peut en outre permettre d'établir une cartographie du terrain sportif en fonction des mesures effectuées et de leur localisation.

Par ailleurs, on peut obtenir le coefficient d'amortissement du sol, à partir de la pente CA en N/s de la droite passant par les sommets des pics consécutifs de la force verticale, lors des impacts et rebonds consécutifs, comme illustré sur la figure 11. On a illustré sur cette figure l'évolution dans le temps de la force verticale Fz lors du fonctionnement du dispositif de simulation, avec un premier appui et 6 rebonds. Le coefficient d'amortissement CA du sol traduit la restitution d'énergie que fournit le sol au cheval. Le coefficient d'amortissement CA permet de prédire la capacité d'un sol à se compacter sous l'effet des rebonds de l'impacteur.

La connaissance de la raideur du sol et de ce coefficient d'amortissement CA peut permettre d'émettre des recommandations d'entretien adaptées pour le sol d'un terrain équestre, notamment des recommandations d'entretien à court terme du sol. L'application de ces recommandations a pour objectif de permettre d'une part d'améliorer les performances du sol, notamment en termes sportifs, et d'autre part de minimiser les risques d'accident.

## Revendications

1. Dispositif de simulation (1) du comportement sur le sol d'un membre d'un mammifère, comportant :
- un impacteur (5) en contact avec le sol destiné à comprimer le sol,
- un axe vertical (15) relié à l'impacteur à son extrémité inférieure,
- une masse (7) mobile selon un axe rectiligne vertical, destinée à provoquer la descente de l'impacteur dans le sol,
- une ou plusieurs butées (17), placées sur une ou des tiges verticales (19) le long desquelles se déplace la masse (7), la ou les tiges verticales (19) étant reliées à l'axe vertical par un ou des organes élastiques (20),
- un capteur de mesure (9) de la force verticale (Fz) appliquée sur l'impacteur,
- un dispositif de mesure (10) de l'enfoncement (Enf) de l'impacteur dans le sol, sous l'effet du déplacement de la masse (7).

2. Dispositif de simulation (1) selon la revendication précédente, dans lequel le dispositif de mesure (10) de l'enfoncement de l'impacteur dans le sol comporte un capteur de déplacement, notamment un potentiomètre linéaire (12).

3. Dispositif de simulation (1) selon l'une quelconque des revendications précédentes, configuré pour que la vitesse de compression du sol soit comprise entre 50 kN/s et 500 kN/s.

4. Dispositif de simulation (1) selon l'une quelconque des revendications précédentes, configuré pour fournir la raideur moyenne (Rm) du sol, qui est le rapport de la force verticale maximale (Fz max) sur l'enfoncement (Enf) correspondant de l'impacteur (5) dans le sol, et/ou les raideurs segmentaires, pour différents niveaux de force, en particulier pour les forces les plus élevées.

5. Dispositif de simulation (1) selon l'une quelconque des revendications précédentes, configuré pour fournir le coefficient d'amortissement (CA) du sol, à partir de la pente de la droite passant par les sommets des pics consécutifs de la force verticale (Fz), lors des impacts et rebonds consécutifs.

6. Dispositif de simulation (1) selon l'une quelconque des revendications précédentes, étant configuré pour être mobile en déplacement, comportant notamment des roues (35), par exemple deux roues (35) sur lesquelles est monté un châssis (30) du dispositif.

7. Dispositif de simulation (1) selon l'une quelconque des revendications précédentes, étant configuré pour permettre des prises de mesure consécutives séparées d'un intervalle de temps inférieur à 15 minutes, mieux inférieur à 12 minutes, voir inférieur à 10 minutes, mieux encore inférieur à 5 minutes.

8. Dispositif de simulation (1) selon l'une quelconque des revendications précédentes, dans lequel le mammifère est un homme ou un animal.

9. Dispositif de simulation (1) selon la revendication précédente, dans lequel le mammifère animal est un équidé et de façon préférentielle un cheval.

10. Procédé de détermination du risque accidentogène d'un terrain sportif, notamment d'un terrain équestre, dans lequel on mesure, au moyen d'un dispositif de simulation (1) selon l'une quelconque des revendications précédentes, au moins l'un des paramètres de la liste suivante : force verticale, force verticale maximale, enfoncement de l'impacteur dans le sol, enfoncement maximal de l'impacteur dans le sol, remontée du sol après l'impact, raideur moyenne et raideurs segmentaires, et coefficient d'amortissement du sol.

11. Procédé selon la revendication précédente, dans lequel on détermine un risque accidentogène du terrain sportif pratiqué par des mammifères, notamment du terrain équestre, à partir du ou des paramètres mesurés.

## Patentansprüche

1. Simulationsvorrichtung (1) zur Simulation des Verhaltens einer Extremität eines Säugetieres auf dem Boden, umfassend:
- einen Impaktor(5), der mit dem Boden in Kontakt ist und dazu bestimmt ist, den Boden zu komprimieren,
- eine vertikale Achse (15), die mit dem Impaktor an ihrem unteren Ende verbunden ist,
- eine Masse (7), die entlang einer vertikalen geradlinigen Achse beweglich ist und dazu bestimmt ist, die Abwärtsbewegung des Impaktors in den Boden herbeizuführen,
- einen oder mehrere Anschläge (17), die an einer oder mehreren vertikalen Stangen (19) platziert sind, entlang von denen sich die Masse (7) bewegt, wobei die vertikale(n) Stange(n) (19) mit der vertikalen Achse durch ein oder mehrere elastische Organe (20) verbunden ist (sind),
- einen Messfühler (9) zum Messen der vertikalen Kraft (Fz), die auf den Impaktor ausgeübt wird,
- eine Messvorrichtung (10) zum Messen des Eindringens (Enf) des Impaktors in den Boden unter der Wirkung der Bewegung der Masse (7).

2. Simulationsvorrichtung (1) nach dem vorhergehenden Anspruch, wobei die Messvorrichtung (10) zum Messen des Eindringens des Impaktors in den Boden einen Bewegungssensor umfasst, insbesondere ein lineares Potentiometer (12).

3. Simulationsvorrichtung (1) nach einem der vorhergehenden Ansprüche, die so ausgestaltet ist, dass die Kompressionsgeschwindigkeit des Bodens zwischen 50 kN/s und 500 kN/s liegt

4. Simulationsvorrichtung (1) nach einem der vorhergehenden Ansprüche, die dazu ausgestaltet ist, die mittlere Steifigkeit (Rm) des Bodens bereitzustellen, die das Verhältnis der maximalen vertikalen Kraft (Fz max) zu dem entsprechenden Eindringen (Enf) des Impaktors (5) in den Boden ist, und/oder die segmentalen Steifigkeiten für verschiedene Kraftstufen, insbesondere für die stärksten Kräfte.

5. Simulationsvorrichtung (1) nach einem der vorhergehenden Ansprüche, die dazu ausgestaltet ist, den Dämpfungskoeffizienten (CA) des Bodens ausgehend von der Steigung der Geraden bereitzustellen, die durch die Spitzen der aufeinander folgenden Peaks der vertikalen Kraft (Fz) bei aufeinander folgenden Aufprall- und Rückprallvorgängen verläuft.

6. Simulationsvorrichtung (1) nach einem der vorhergehenden Ansprüche, wobei sie dazu ausgestaltet ist, verfahrbar zu sein, wobei sie insbesondere Räder (35) umfasst, beispielsweise zwei Räder (30), auf denen ein Gestell (35) der Vorrichtung montiert ist.

7. Simulationsvorrichtung (1) nach einem der vorhergehenden Ansprüche, wobei sie dazu ausgestaltet ist, aufeinander folgende Messaufnahmen zu ermöglichen, die um ein Zeitintervall von weniger als 15 Minuten, besser weniger als 12 Minuten oder sogar weniger als 10 Minuten, noch besser weniger als 5 Minuten getrennt sind.

8. Simulationsvorrichtung (1) nach einem der vorhergehenden Ansprüche, wobei das Säugetier ein Mensch oder ein Tier ist.

9. Simulationsvorrichtung (1) nach dem vorhergehenden Anspruch, wobei das tierische Säugetier ein Equid und vorzugsweise ein Pferd ist.

10. Verfahren zur Bestimmung des Unfallrisikos eines Sportplatzes, insbesondere eines Reitplatzes, bei dem mittels einer Simulationsvorrichtung (1) nach einem der vorhergehenden Ansprüche mindestens einer der Parameter aus der folgenden Liste gemessen wird: vertikale Kraft, maximale vertikale Kraft, Eindringen des Impaktors in den Boden, maximales Eindringen des Impaktors in den Boden, Wiederaufsteigen des Bodens nach dem Aufprall, mittlere Steifigkeit und segmentale Steifigkeiten und Dämpfungskoeffizient des Bodens.

11. Verfahren nach dem vorhergehenden Anspruch, wobei ein Unfallrisiko des von Säugetieren genutzten Sportplatzes, insbesondere des Reitplatzes, ausgehend von dem oder den gemessenen Parametern bestimmt wird.

## Claims

1. Device (1) for simulating the behaviour on the ground of a limb of a mammal, including:
- an impactor (5) in contact with the ground, which is intended to compress the ground,
- a vertical shaft (15) connected to the impactor at the lower end thereof,
- a mass (7) that is movable along a vertical rectilinear shaft and is intended to cause the descent of the impactor into the ground,
- one or more stops (17) placed on one or more vertical rods (19) along which the mass (7) moves, the vertical rod or rods (19) being connected to the vertical shaft by one or more elastic members (20),
- a sensor (9) for measuring the vertical force (Fz) applied to the impactor,
- a device (10) for measuring the penetration (Enf) of the impactor into the ground, under the effect of the movement of the mass (7).

2. Simulation device (1) according to the preceding claim, wherein the device (10) for measuring the penetration of the impactor into the ground includes a movement sensor, notably a linear potentiometer (12).

3. Simulation device (1) according to either one of the preceding claims, configured so that the compression speed of the ground is between 50 kN/s and 500 kN/s.

4. Simulation device (1) according to any one of the preceding claims, configured to provide the average stiffness (Rm) of the ground, which is the ratio of the maximum vertical force (Fz max) to the corresponding penetration (Enf) of the impactor (5) into the ground, and/or the segment stiffnesses for different force levels, in particular for the greatest forces.

5. Simulation device (1) according to any one of the preceding claims, configured to provide the damping coefficient (CA) of the ground, from the slope of the straight line passing through the vertices of the consecutive peaks of the vertical force (Fz), during consecutive impacts and rebounds.

6. Simulation device (1) according to any one of the preceding claims, configured to be movable, notably having wheels (35), for example two wheels (35) on which a chassis (30) of the device is mounted.

7. Simulation device (1) according to any one of the preceding claims, configured to enable consecutive measurements to be taken, separated by an interval of time of less than 15 minutes, or better still less than 12 minutes, or even less than 10 minutes, or even better less than 5 minutes.

8. Simulation device (1) according to any one of the preceding claims, wherein the mammal is a human or an animal.

9. Simulation device (1) according to the preceding claim, wherein the animal mammal is an equine animal, and preferably a horse.

10. Method for determining the accident risk of a sportsground, notably an equestrian sportsground, wherein a simulation device (1) according to any one of the preceding claims is used to measure at least one of the parameters from the following list: vertical force, maximum vertical force, penetration of the impactor into the ground, maximum penetration of the impactor into the ground, recoil of the ground following impact, average stiffness and segment stiffnesses, and damping coefficient of the ground.

11. Method according to the preceding claim, wherein an accident risk of the sportsground used by mammals, notably of the equestrian sportsground, is determined using the measured parameter or parameters.
